(19) Europäisches Patentamt
European Patent Office
Office européen des brevets

(11) **EP 4 261 720 B1**

(12) **EUROPEAN PATENT SPECIFICATION**

(45) Date of publication and mention
of the grant of the patent:
**15.04.2026   Bulletin 2026/16**

(21) Application number: **21919309.1**

(22) Date of filing: **13.01.2021**

(51) International Patent Classification (IPC):
**G06F 21/55** *(2013.01)*      **G06F 21/64** *(2013.01)*
**G06F 21/56** *(2013.01)*

(52) Cooperative Patent Classification (CPC):
**G06F 21/554; G06F 21/552; G06F 21/565**

(86) International application number:
**PCT/JP2021/000924**

(87) International publication number:
**WO 2022/153415 (21.07.2022 Gazette 2022/29)**

(54) **FALSIFICATION DETECTING DEVICE, FALSIFICATION DETECTING METHOD, AND FALSIFICATION DETECTING PROGRAM**

VORRICHTUNG ZUR ERKENNUNG VON FÄLSCHUNGEN, VERFAHREN ZUR ERKENNUNG VON FÄLSCHUNGEN UND PROGRAMM ZUR ERKENNUNG VON FÄLSCHUNGEN

DISPOSITIF DE DÉTECTION DE FALSIFICATION, PROCÉDÉ DE DÉTECTION DE FALSIFICATION, ET PROGRAMME DE DÉTECTION DE FALSIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.10.2023   Bulletin 2023/42**

(73) Proprietor: **NTT, Inc.**
**Tokyo 100-8116 (JP)**

(72) Inventors:
• **YAMANAKA, Yuki**
  **Musashino-shi, Tokyo 180-8585 (JP)**
• **ITO, Manami**
  **Musashino-shi, Tokyo 180-8585 (JP)**
• **SATO, Ryota**
  **Musashino-shi, Tokyo 180-8585 (JP)**
• **TAKIGUCHI, Hiroyoshi**
  **Musashino-shi, Tokyo 180-8585 (JP)**
• **CHIBA, Nobuhiro**
  **Musashino-shi, Tokyo 180-8585 (JP)**
• **NAKAJIMA, Yoshiaki**
  **Musashino-shi, Tokyo 180-8585 (JP)**

(74) Representative: **Hoffmann Eitle**
**Patent- und Rechtsanwälte PartmbB**
**Arabellastraße 30**
**81925 München (DE)**

(56) References cited:
JP-A- 2010 211 453        US-A1- 2006 021 041
US-A1- 2006 037 079       US-A1- 2007 079 377
US-A1- 2017 337 377       US-A1- 2020 034 534
US-A1- 2020 034 534       US-B1- 9 141 794

EP 4 261 720 B1

**Description**

Technical Field

The present invention relates to a tampering detection device, a tampering detection method, and a tampering detection program.

Background Art

The software tampering detection technique is a technique of acquiring a digest (a hash value or the like) of a monitoring target file at a certain point of time when the file can be regarded as normal, and periodically comparing the acquired digest with the current digest of the monitoring target file to check whether or not the target file has been illicitly tampered with. In general, this tampering detection technique is installed in a certain device, and is used for the purpose of securing authenticity of the device by periodically scanning the entire monitoring target file in the device. As a method of this scanning, the three methods described below have been conventionally used.

The first method is a cyclic scan method. In this method, the entire monitoring target file is scanned in a fixed order based on a certain rule such as ascending order of path names and node number order.

The second method is a random scan method. In this method, a file to be scanned next is uniformly and randomly selected from all monitoring target files, and the file is scanned.

The third method is an on-access scan method. In this method, a function of an operating system (OS) such as fanotify is utilized, an access to a file is detected and hooked, scanning is performed, and file access is permitted when tampering is not performed.

Citation List

Patent Literature

Patent Literature 1: JP 2019-008376 A
Patent Literature 2: JP 2019-008732 A
Patent Literature 3: JP 2019-207661 A
Patent Literature 4: US 2007/079377 A1 refers to virus scanning in a computer system. The scan of executable files is prioritised, such as applications, libraries, services ahead of other files. Thereby details on the start up of applications and/or launch frequency of installed applications can be used so that the scan of higher risk files can be prioritised.
Patent Literature 5: US 2020/034534 A1 refers to a predictive scheduled antivirus scanning in which parameters are analysed by machine learning so that scheduled antivirus scanning can be intelligently conducted. Sequential order for scheduled antivirus scanning is created such that the files most likely to be accessed or needed by users in the future will be scanned for viruses before those files less likely to be access.

Summary of Invention

Technical Problem

However, in the conventional technique, it is not possible to reduce the possibility that an authorized program executes an illicitly tampered file while suppressing use resources in a monitoring target device. This is because the above-described three scan methods have the problems described below.

In the cyclic scan method, which is the first method, a file that has been scanned once is not scanned again until scanning of all the other files is completed. Therefore, in a situation where available resources such as a central processing unit (CPU) and memory are limited, a time taken until all the files are scanned in one cycle often becomes long. Thus, even when tampering is performed, it is difficult to immediately find the tampering, and there is a possibility that an authorized program executes an illicitly tampered file without noticing the tampering.

In the random scan method, which is the second method, since a file to be scanned is selected completely randomly, there is a possibility that it takes an enormous amount of time from when a certain file is scanned to when the file is scanned next.

In the on-access scan method, which is the third method, the possibility that an authorized program unintentionally executes an illicitly tampered file can be almost completely zeroed, but monitoring and file access hooking in the OS consume considerable memory and CPU resources, and a response of an input/output (I/O) is reduced, so that an operation of the device is considerably affected.

Solution to Problem

The above-described problems and the object is achieved by the subject matter of the independent claims. Advantageous embodiments are disclosed in the dependent claims.

Advantageous Effects of Invention

The present invention can reduce the possibility that an authorized program executes an illicitly tampered file while suppressing use resources in a monitoring target device.

Brief Description of Drawings

Fig. 1 is a diagram illustrating a configuration example of a tampering detection system according to a first embodiment.
Fig. 2 is a block diagram illustrating a configuration example of a tampering detection device according to the first embodiment.
Fig. 3 is a block diagram illustrating a configuration example of a monitoring target device according to the first embodiment.
Fig. 4 is a diagram for describing a definition of each constant according to the first embodiment.
Fig. 5 is a diagram for describing an evaluation index of a scan pattern according to the first embodiment.
Fig. 6 is a flowchart illustrating an example of a flow of tampering detection processing according to the first embodiment.
Fig. 7 is a flowchart illustrating an example of a flow of scan pattern determination processing according to the first embodiment.
Fig. 8 is a diagram illustrating a computer that executes a program.

Description of Embodiments

Hereinafter, an embodiment of a tampering detection device, a tampering detection method, and a tampering detection program according to the present invention will be described in detail with reference to the drawings. Note that the present invention is not limited to the embodiment described below.

[First Embodiment]

Hereinafter, a configuration of a tampering detection system, a configuration of a tampering detection device, a configuration of a monitoring target device, the definition of each constant, an evaluation index of a scan pattern, a flow of tampering detection processing, and a flow of scan pattern determination processing according to the present embodiment will be described in order, and finally, the effects of the present embodiment will be described.

[Configuration of Tampering Detection System]

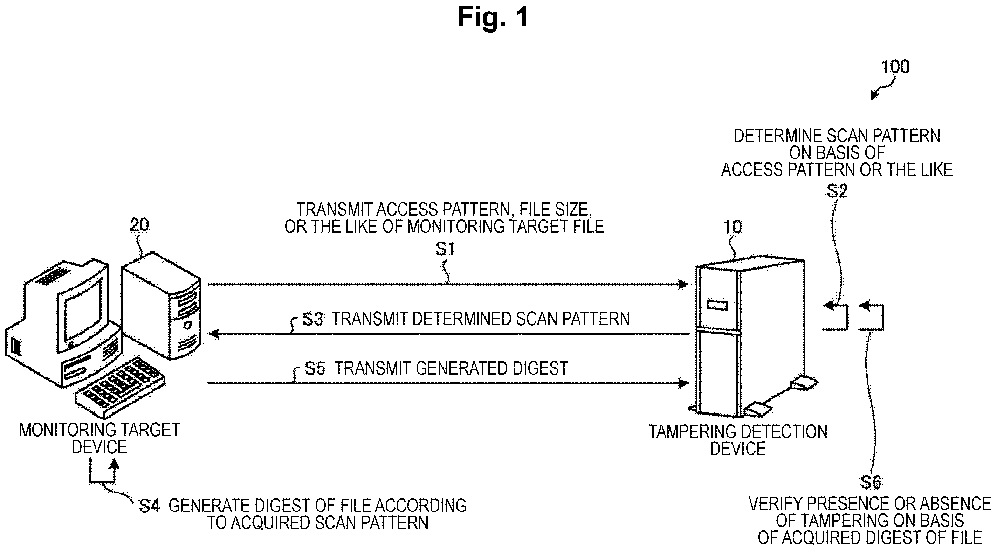

A configuration of a tampering detection system (appropriately referred to as the present system) 100 according to the present embodiment will be described in detail with reference to Fig. 1. Fig. 1 is a diagram illustrating a configuration example of the tampering detection system according to the first embodiment. The tampering detection system 100 includes a tampering detection device 10 such as a server and a monitoring target device 20 such as various terminals. Here, the tampering detection device 10 and the monitoring target device 20 are connected to be communicable by wire or wirelessly via a predetermined communication network, which is not illustrated. Note that tampering detection system 100 illustrated in Fig. 1 may include a plurality of tampering detection devices 10 and a plurality of monitoring target devices 20.

First, the monitoring target device 20 transmits an access pattern, a file size, or the like of the monitoring target file to the tampering detection device 10 as information for determining a scan pattern (step S1). Here, the information for determining the scan pattern is information regarding the monitoring target device ("monitoring target device information" as appropriate) and information regarding the monitoring target file ("file information" as appropriate).

The monitoring target device information is information regarding resources of the monitoring target device or the like, and is, for example, but is not particularly limited to, information regarding a processing speed and a use amount of the CPU, a memory capacity, a storage capacity, and hash calculation, information regarding communication, and the like. In addition, the monitoring target device information is basic information of the monitoring target file stored in the monitoring target device or the like, and is, for example, but is not particularly limited to, a file name, a file type, a file size indicating a data size of the file, a list thereof, the number of files stored in the monitoring target device, or the like.

The file information is information regarding access of the monitoring target file stored in the monitoring target device or the like, and includes, for example, information acquired or extracted by the tampering detection device 10 in addition to information such as the number of times of access, an access pattern, and an access source for each file included in an access log, but is not particularly limited thereto.

Next, the tampering detection device 10 determines a scan pattern on the basis of the acquired access pattern or the like (step S2). Here, the scan pattern indicates an order of one cycle of processing (scan processing) in which the monitoring target device 20 generates a digest of each file ("file digest" as appropriate) for the monitoring target file stored in the monitoring target device 20, but is not particularly limited thereto. The scan pattern may indicate a time, an interval, or the like at which each scan processing is performed.

Note that the digest of the file generated by the monitoring target device 20 is, but particularly not limited to, data generated through hash calculation or the like. In addition, the tampering detection device 10 can determine the scan pattern not including a specific file by static or dynamic setting. Detailed scan pattern determination processing by the tampering detection device 10 will be described below in [Flow of Scan Pattern Determination Processing].

Subsequently, the tampering detection device 10 transmits the determined scan pattern to the monitoring target device 20 (step S3). Then, the monitoring target device 20 generates the digest of the file according to the acquired scan pattern (step S4). Further, the monitoring target device 20 transmits the generated digest of the file to the tampering detection device 10 (step S5).

Finally, the tampering detection device 10 verifies whether the file has been tampered with on basis of the acquired digest of the file (step S6). At this time, the tampering detection device 10 compares the digest of the correct file stored in the tampering detection device 10 with the acquired digest of the file, and determines that the file has been tampered with when the digests are different.

The tampering detection system 100 according to the present embodiment acquires a file access log and the file size of a monitoring target file from the monitoring target device, calculates a time required for scanning a target file (= digest acquisition) from the file size on the basis of these pieces of information, and generates a scan pattern in consideration of the time required for scanning for each file and the access pattern to the target file. Therefore, it is possible to reduce the possibility that an authorized program executes an illicitly tampered file while suppressing use resources in a device.

[Configuration of Tampering Detection Device]

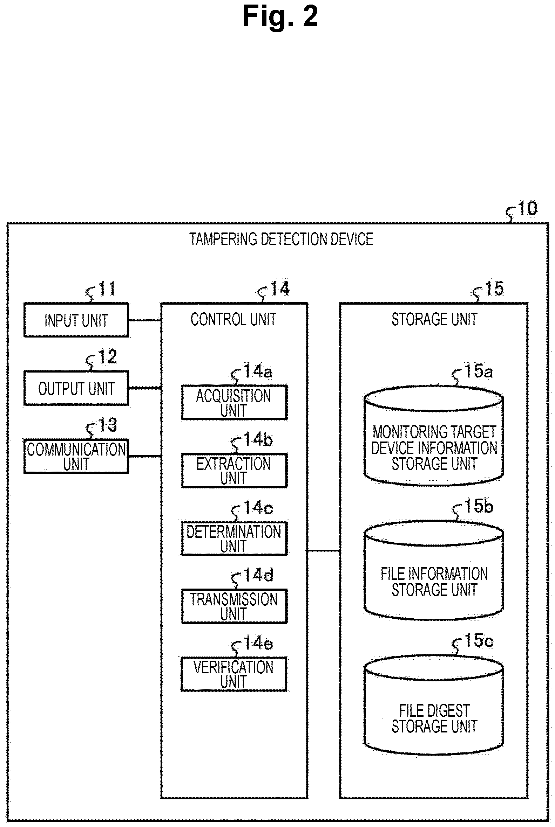

A configuration of the tampering detection device 10 according to the present embodiment will be described in detail with reference to Fig. 2. Fig. 2 is a block diagram illustrating a configuration example of the tampering detection device according to the present embodiment. The tampering detection device 10 includes an input unit 11, an output unit 12, a communication unit 13, a control unit 14, and a storage unit 15.

The input unit 11 controls inputting various types of information to the tampering detection device 10. The input unit 11 is, for example, a mouse, a keyboard, or the like, and accepts input of setting information or the like to the tampering detection device 10. In addition, the output unit 12 controls outputting various types of information from the tampering detection device 10. The output unit 12 is, for example, a display or the like and outputs the setting information or the like stored in the tampering detection device 10.

The communication unit 13 controls data communication with other devices. For example, the communication unit 13 performs data communication with each communication device. In addition, the communication unit 13 can perform data communication with a terminal of an operator, which is not illustrated.

The storage unit 15 stores various types of information referred to when the control unit 14 operates and various types of information acquired when the control unit 14 operates. The storage unit 15 includes a monitoring target device information storage unit 15a, a file information storage unit 15b, and a file digest storage unit 15c. Here, the storage unit 15 is, for example, a semiconductor memory element such as random access memory (RAM) or flash memory, a storage device such as a hard disk, an optical disc, or the like. Note that, in the example of Fig. 2, the storage unit 15 is installed inside the tampering detection device 10, but may be installed outside the tampering detection device 10, or a plurality of storage units may be installed.

The monitoring target device information storage unit 15a stores monitoring target device information such as information regarding resources of the monitoring target device acquired by an acquisition unit 14a of the control unit 14 and basic information of the monitoring target file. The monitoring target device information storage unit 15a stores, for example, information regarding a processing speed of the CPU, a memory capacity, a storage capacity, and hash calculation as information regarding resources of the monitoring target device, and stores a file name of the file, a file type, a file size indicating a data size of the file, a list thereof, the number of files stored in the monitoring target device, and the like as basic information of the monitoring target file.

The file information storage unit 15b stores, as file information, information included in the access log acquired by the acquisition unit 14a of the control unit 14. For example, the file information storage unit 15b stores information such as the number of times of access, an access pattern, and an access source for each file as information included in the access log described above. Further, the file information storage unit 15b may store the time ("scan pattern set time" as appropriate) $\tau_{all}$ for one scan processing cycle acquired by the acquisition unit 14a.

In addition, the file information storage unit 15b stores information extracted by an extraction unit 14b of the control unit 14 as file information. For example, the file information storage unit 15b stores, as the information extracted by the extraction unit 14b described above, a time ("time required for hash calculation" as appropriate) $\tau_i$ required to calculate the hash value of the file i, a time-series pattern of access, an access frequency, and the like. Further, the file information storage unit 15b may store the scan pattern determined by a determination unit 14c.

The file digest storage unit 15c stores information regarding a correct monitoring target file for verifying tampering acquired by the acquisition unit 14a of the control unit 14. For example, the file digest storage unit 15c stores a file digest generated using hash calculation from a file stored in the monitoring target device as information regarding a correct monitoring target file for verifying tampering.

The control unit 14 controls the entire tampering detection device 10. The control unit 14 includes the acquisition unit 14a, the extraction unit 14b, the determination unit 14c, a transmission unit 14d, and a verification unit 14e. Here, the control unit 14 is, for example, an electronic circuit such as a CPU or a micro processing unit (MPU), or an integrated circuit such as an application specific integrated circuit (ASIC) or a field programmable gate array (FPGA).

The acquisition unit 14a acquires the access pattern of the monitoring target file. For example, the acquisition unit 14a acquires the access pattern from the monitoring target device 20 that stores the monitoring target file. In addition, the acquisition unit 14a acquires the access pattern included in the access log of the monitoring target file of the monitoring target device 20. In addition, the acquisition unit 14a acquires the file size of the monitoring target file and the scan pattern set time. In addition, the acquisition unit 14a calculates and acquires a time required for hash calculation for each file from the acquired file size. Further, the acquisition unit 14a acquires the digest of the file generated by the monitoring target device 20.

On the other hand, the acquisition unit 14a stores the acquired monitoring target device information such as resources of the monitoring target device 20 in the monitoring target device information storage unit 15a. In addition, the acquisition unit 14a stores the acquired file information such as the access pattern in the file information storage unit 15b. Further, the acquisition unit 14a transmits the acquired digest of the file to the verification unit 15e.

Here, the access pattern includes, but is not particularly limited to, the number of times of reading by another process (access frequency) for each monitoring target file in a certain period, the order of reading by another process or a temporal tendency for the monitoring target file (time-series pattern of access), or the like, which are acquired from the access log of the monitoring target device 20. The access frequency and the time-series pattern of access may be information classified for each of other processes that are access sources.

The extraction unit 14b extracts the time-series pattern of access for each monitoring target file from the access pattern acquired by the acquisition unit 14a. In addition, the extraction unit 14b extracts the access frequency for each monitoring target file from the access pattern acquired by the acquisition unit 14a. On the other hand, the extraction unit 14b stores the extracted file information such as the time-series pattern of access and the access frequency in the file information storage unit 15b. Note that detailed extraction processing of the information acquired by the tampering detection device 10 will be described below in [Flow of Scan Pattern Determination Processing].

The determination unit 14c determines a scan pattern on the basis of the access frequency and the time-series pattern of access extracted by the extraction unit 14b. For example, the determination unit 14c determines the scan pattern using a genetic algorithm. In addition, the determination unit 14c determines a scan pattern in which all the monitoring target files are included at least once by adding a predetermined penalty. Further, the determination unit 14c determines a scan pattern that minimizes an average time from scanning of the monitoring target file to the latest access.

At this time, the determination unit 14c refers to the monitoring target device information stored in the monitoring target device information storage unit 15a. In addition, the determination unit 14c refers to the file information stored in the file information storage unit 15b. Note that detailed scan pattern determination processing by the tampering detection device 10 will be described below in [Flow of Scan Pattern Determination Processing].

The transmission unit 14d transmits the scan pattern determined by the determination unit 14c to the monitoring target device 20. In addition, the transmission unit 14d may transmit whether the file verified by the verification unit 14e has been tampered with to the monitoring target device 20 or another terminal.

The verification unit 14e verifies whether the file has been tampered with by using the digest of the file generated on the basis of the scan pattern by the monitoring target device 20. At this time, the verification unit 14e refers to the file digest of the correct monitoring target file stored in the file digest storage unit 15c.

[Configuration of Monitoring Target Device]

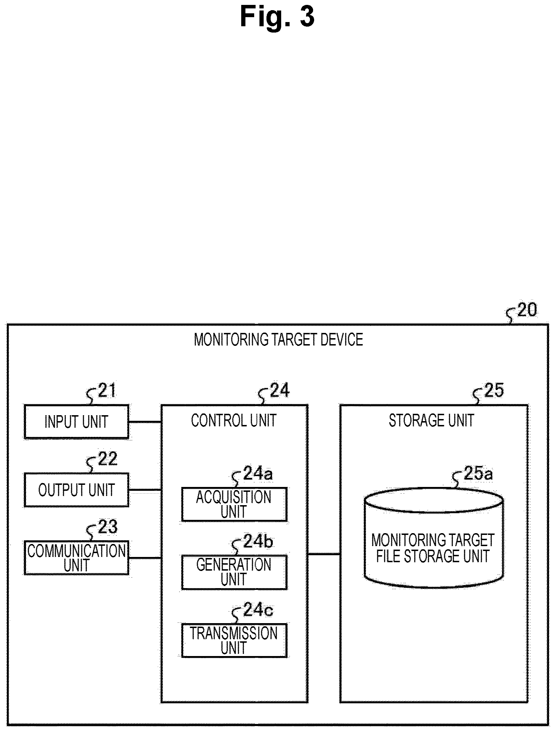

A configuration of the monitoring target device 20 according to the present embodiment will be described in detail with reference to Fig. 3. Fig. 3 is a block diagram illustrating a configuration example of a monitoring target device according to the present embodiment. The monitoring target device 20 includes an input unit 21, an output unit 22, a communication unit 23, a control unit 24, and a storage unit 25.

The input unit 21 controls inputting various types of information to the monitoring target device 20. The input unit 21 is, for example, a mouse, a keyboard, or the like, and accepts input of setting information or the like to the monitoring target device 20. In addition, the output unit 22 controls outputting various types of information from the monitoring target device 20. The output unit 22 is, for example, a display or the like and outputs the setting information or the like stored in the monitoring target device 20.

The communication unit 23 controls data communication with other devices. For example, the communication unit 23 performs data communication with each communication device. In addition, the communication unit 23 can perform data communication with a terminal of an operator, which is not illustrated.

The storage unit 25 stores various types of information referred to when the control unit 24 operates and various types of information acquired when the control unit 24 operates. The storage unit 25 includes, for example, a monitoring target file storage unit 25a. Here, the storage unit 25 is, for example, a semiconductor memory element such as RAM or flash memory, or a storage device such as a hard disk or an optical disc. Note that, in the example of Fig. 3, the storage unit 25 is installed inside the monitoring target device 20, but may be installed outside the monitoring target device 20, or a plurality of storage units may be installed. The monitoring target file storage unit 25a stores a monitoring target file that can be accessed from the outside or tampered with.

The control unit 24 controls the entire monitoring target device 20. The control unit 24 includes an acquisition unit 24a, a generation unit 24b, and a transmission unit 24c. Here, the control unit 24 is, for example, an electronic circuit such as a CPU or an MPU, or an integrated circuit such as an ASIC or an FPGA.

The acquisition unit 24a acquires a scan pattern of files from the tampering detection device 10. In addition, the acquisition unit 24a may acquire information regarding whether or not the file has been tampered with from the tampering detection device 10.

The generation unit 24b generates the digest of the file according to the scan pattern of the file acquired by the acquisition unit 24a. In addition, the generation unit 24b may store the generated digest of the file in the storage unit 25.

The transmission unit 24c transmits the digest of the file generated by the generation unit 24b to the tampering detection device 10. In addition, the transmission unit 24c may transmit the digest of the file to a terminal other than the tampering detection device 10.

[Definition of Each Constant]

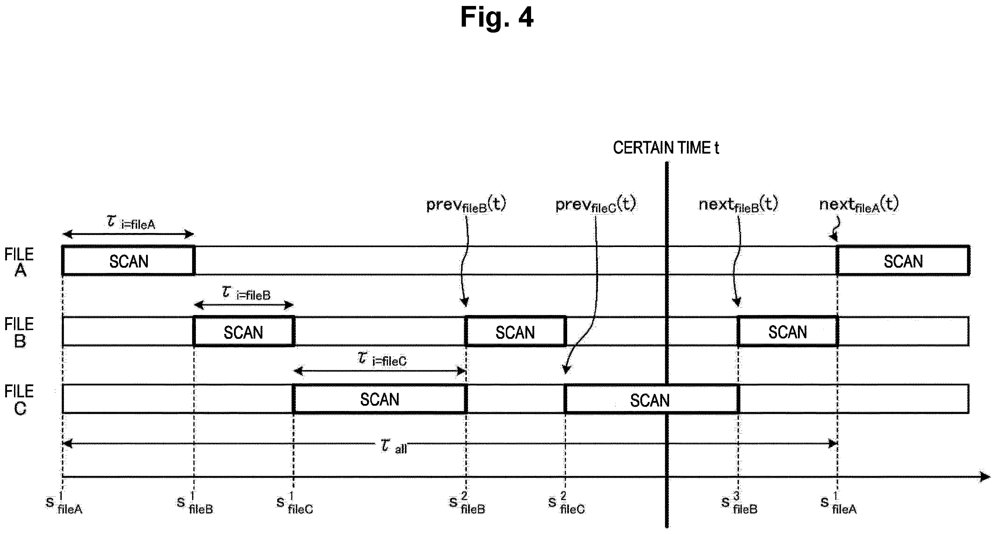

The definition of each constant according to the present embodiment will be described in detail with reference to Fig. 4. Fig. 4 is a diagram for describing a definition of each constant according to the first embodiment.

It is assumed that there are N files {1, 2, ..., N} of a monitoring target file group in the monitoring target device 20, and an i-th file is referred to as a file i. In addition, the symbol i is also used as a symbol indicating a file name of an arbitrary file as appropriate, such as "i = file A".

"$\tau_i$" represents a time required for hash calculation of the file i, and a numerical value thereof is obtained by Formula (1). Here, the constant determined by the hash calculation method is a calculation amount for each byte of the file depending on the hash algorithm.

[Math. 1]

$$\tau_i = \frac{[\text{Constant determined by hash calculation method}]\ [\text{Size of file i}]}{[\text{Use amount of CPU}]} + [\text{Delay by communication or the like}] \quad \cdots (1)$$

Note that, in Fig. 4, the time required for the hash calculation of "file A", "file B", and "file C" is illustrated.

"$\tau_{av}$" represents an average time required for hash calculation of the file, and a numerical value thereof is obtained by Formula (2).

[Math. 2]

$$\tau_{av} = E[\tau_i] = \frac{1}{N}\sum_{i=1} \tau_i \qquad \cdots (2)$$

Formula (3) represents a scan pattern for the file i. Here, "$s_i{}^j$" represents a j-th scan start time for the file i, and "$k_i$" represents the number of times of scanning in the scan pattern for the file i, that is, the number of times of scanning per scan processing cycle.

[Math. 3]

$$\left[ s_i^1, s_i^2, \ldots, s_i^{k_i} \right] \qquad \cdots (3)$$

Note that Fig. 4 illustrates first scan start times of the first and second cycles for "file A", first to third scan start times of the first cycle for "file B", and first and second scan start times of the first cycle for "file C".

"$\tau_{all}$" represents the time required to execute the scan pattern, that is, the time for one scan processing cycle, and is expressed by Formula (4).

[Math. 4]

$$\tau_{all} = \sum_i k_i \tau_i \qquad \cdots (4)$$

Note that, in Fig. 4, the time from the first scan start time for "file A" to the third scan end time for "file B" corresponds to "$\tau_{all}$".

"$next_i(t)$" is a time at which scanning of the file i is started for the first time after a certain time t, and is determined by a scan pattern. Note that, in Fig. 4, "$next_i(t)$" is illustrated for each of scans of "file A" and "file B" after a certain time t.

"$prev_i(t)$" is a time at which scanning of the file i is started immediately before a certain time t, and is determined by a scan pattern. Note that, in Fig. 4, "$prev_i(t)$" is illustrated for each of scans of "file B" and "file C" immediately before a certain time t.

[Evaluation Index of Scan Pattern]

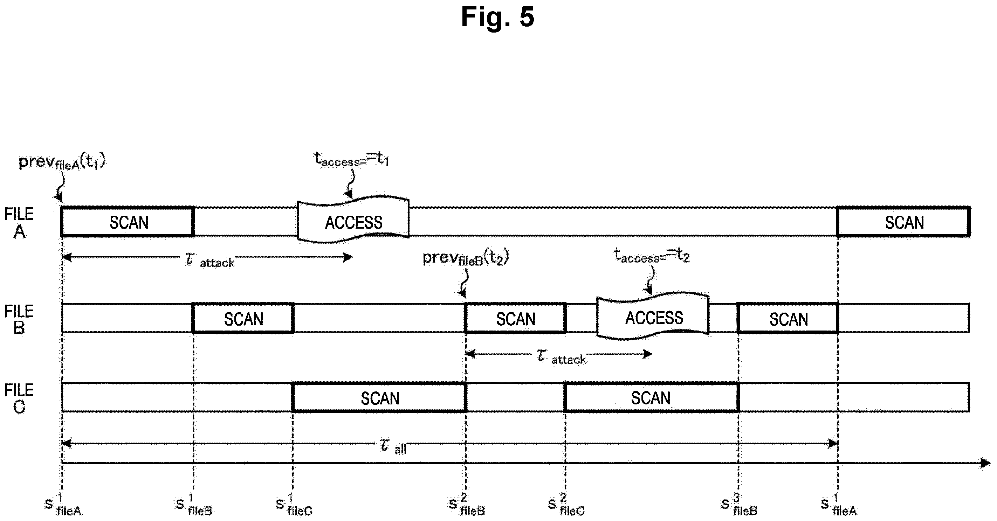

The evaluation index of the scan pattern according to the present embodiment will be described in detail with reference to Fig. 5. Fig. 5 is a diagram for describing an evaluation index of a scan pattern according to the first embodiment. In the present embodiment, $E[\tau_{attack}]$ is introduced as an evaluation index for determining whether a scan pattern is good or bad in order to formulate a "possibility that an authorized program unintentionally executes an illicitly tampered file". Hereinafter, the definition and optimization of the evaluation index $E[\tau_{attack}]$ will be described.

(Definition of Evaluation Index $E[\tau_{attack}]$)

First, the definition of the evaluation index $E[\tau_{attack}]$ will be described. "$\tau_{attack}$" represents a time until another process uses the file i after the file i is scanned, that is, a time from scanning to the latest access, and a numerical value thereof is obtained by Formula (5). Here, "$t_{access}$" is a time at which the file i is read by another process, that is, a time at which the file i is accessed, and it is assumed that all accesses occur instantaneously without time width.

[Math. 5]

$$\tau_{attack} = t_{access} - prev_i(t_{access}) \qquad \cdots (5)$$

Note that, in Fig. 5, an access to "file A" occurs at time $t_1$, and time $\tau_{attack}$ until "file A" is accessed after scanning is illustrated. In addition, an access to "file B" occurs at time $t_2$, and time $\tau_{attack}$ until "file B" is accessed after scanning is illustrated.

In addition, "$q_i(t)$" represents a probability that an access to the file i occurs at a certain time t.

As described above, the evaluation index $E[\tau_{attack}]$ represents an average time until another process reads the monitoring target file after scanning, that is, an average time from scanning of the monitoring target file to the latest access, and is expressed by Formula (6). Note that the evaluation index $E[\tau_{attack}]$ can also be defined as "an unprotected time of the monitoring target file" or "a tamperable time of the monitoring target file".

[Math. 6]

$$E[\tau_{attack}] = \frac{1}{N}\sum_i \int \left(t - prev_i(t)\right)q_i(t)dt \qquad \cdots (6)$$

When the evaluation index $E[\tau_{attack}]$ is reduced, even if tampering occurs, scanning is performed before the file is used. Note that, in the on-access scan method, this index is zero.

(Optimization of Evaluation Index $E[\tau_{attack}]$)

Next, optimization of the evaluation index $E[\tau_{attack}]$ according to the present embodiment will be described. First, at the time of tampering detection, it is desired to generate a scan pattern that reduces the evaluation index $E[\tau_{attack}]$. However, in general, a probability $q_i(t)$ that an access from an authorized program occurs to the file i at a certain time t is unknown. Therefore, in Formula (6) above, various optimization methods are conceivable depending on how to handle $q_i(t)$. Hereinafter, an optimization method for replacing $q_i(t)$ with an actual access pattern of the monitoring target file will be described.

In Formula (6) above, $q_i(t)$ can be expressed as Formula (7).
[Math. 7]

$$q_i(t) = \frac{1}{\tau_{all}}\sum_{j=1}^{k_i} \delta\left(t - t_j\right) \qquad \cdots (7)$$

When the access pattern of the monitoring target file is collected from the monitoring target device and $q_i(t)$ is replaced, the evaluation index $E[\tau_{attack}]$ can be expressed by Formula (8).
[Math. 8]

$$E[\tau_{attack}] = \frac{1}{N\,\tau_{all}}\sum_{i,j}\left(t_j - prev_i(t_j)\right) \qquad \cdots (8)$$

A scan pattern that minimizes $E[\tau_{attack}]$ of Formula (8) above is generated using a genetic algorithm under the constraint condition represented by Formula (9) below.
[Math. 9]

$$\sum_i \tau_i k_i = \tau_{all} \qquad \cdots (9)$$

As described above, the optimization of the evaluation index $E[\tau_{attack}]$ according to the present embodiment is a method of directly obtaining a scan pattern that minimizes $E[\tau_{attack}]$ by using a genetic algorithm. Thus, it is possible to generate a scan pattern in consideration of not only the access frequency to a file but also the time-series pattern of access (for example, after accessing "file A", "file B" is always accessed).

[Flow of Tampering Detection Processing]

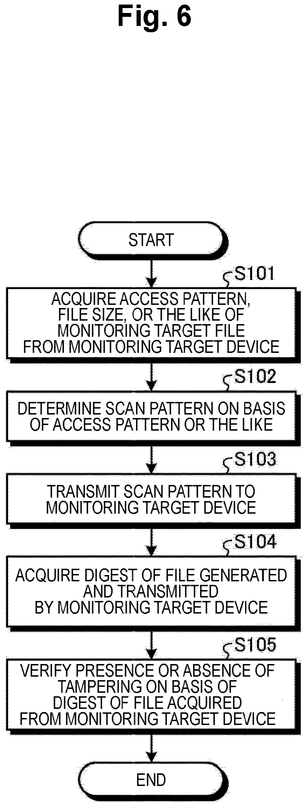

A flow of the tampering detection processing according to the present embodiment will be described in detail with reference to Fig. 6. Fig. 6 is a flowchart illustrating an example of a flow of tampering detection processing according to the first embodiment. First, the acquisition unit 14a of the tampering detection device 10 acquires information such as information of an access pattern and a file size of the monitoring target file from the monitoring target device 20 (step S101). At this time, the acquisition unit 14a may acquire the information from a device other than the monitoring target device 20. In addition, the acquisition unit 14a may acquire information directly input via the input unit 11.

Next, the determination unit 14c determines an optimum scan pattern on the basis of the information acquired from the monitoring target device 20 such as an access pattern (step S102). At this time, the extraction unit 14b may perform extraction processing of information necessary for the determination unit 14c to determine the scan pattern. In addition, when there is a scan pattern created in advance, the determination unit 14c can also adopt this scan pattern. Further, when a plurality of scan patterns can be determined, the determination unit 14c can adopt one or a plurality of scan patterns from the scan patterns.

Subsequently, the transmission unit 14d transmits the scan pattern to the monitoring target device 20 (step S103). At this time, the transmission unit 14d may transmit the scan patterns in bulk (collectively) or may transmit the scan patterns one by one. In addition, the transmission unit 14d may transmit a plurality of scan patterns.

Then, the acquisition unit 14a acquires a digest of a file generated by the generation unit 24b of the monitoring target device 20 and transmitted by the transmission unit 24c (step S104). Finally, the verification unit 14e verifies whether the file has been tampered with on the basis of the digest of the file acquired by the acquisition unit 14a (step S105), and the tampering detection processing ends. Note that the transmission unit 14d may transmit whether the file has been tampered with verified by the verification unit 14e to the monitoring target device 20 or another terminal.

[Flow of Scan Pattern Determination Processing]

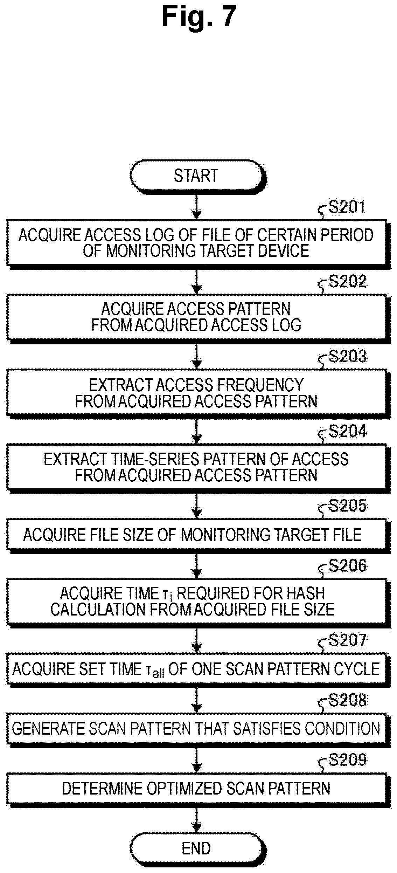

The flow of the scan pattern determination processing according to the present embodiment will be described in detail with reference to Fig. 7. Fig. 7 is a flowchart illustrating an example of a flow of scan pattern determination processing according to the first embodiment.

First, the acquisition unit 14a of the tampering detection device 10 acquires an access log of a monitoring target file in the monitoring target device 20 for a certain period from the monitoring target device 20 (step S201), and acquires an access pattern for each monitoring target file from the access log (step S202).

At this time, the acquisition unit 14a may acquire the access log from a device other than the monitoring target device 20. In addition, the acquisition unit 14a may acquire the access log directly input via the input unit 11. Note that in a certain period regarding the acquisition of the access log, the monitoring target device 20 may perform the scan processing by an arbitrary method or may not perform the scan processing.

Next, the extraction unit 14b of the tampering detection device 10 extracts the access frequency of the monitoring target file from the access pattern acquired by the acquisition unit 14a (step S203). In addition, the extraction unit 14b extracts the time-series pattern of access of the monitoring target file from the access pattern acquired by the acquisition unit 14a (step S204). Further, the extraction unit 14b may extract the information regarding an access source from the access pattern acquired by the acquisition unit 14a.

Next, the acquisition unit 14a of the tampering detection device 10 acquires the file size of the monitoring target file from the monitoring target device 20 (step S205). At this time, the acquisition unit 14a may acquire the file size from a device other than the monitoring target device 20. In addition, the acquisition unit 14a may acquire the file size directly input via the input unit 11.

Then, the acquisition unit 14a calculates and acquires a time $\tau_i$ required for hash calculation for each file from the file size described above and the like (step S206). Note that the acquisition unit 14a uses above Formula (1) when calculating $\tau_i$ described above. In addition, the acquisition unit 14a may calculate and acquire an average time $\tau_{av}$ required for hash calculation of the file represented by Formula (2) described above.

Subsequently, the acquisition unit 14a acquires a set time $\tau_{all}$ of one scan processing cycle (step S207). Here, $\tau_{all}$ is a numerical value given as a set value from the outside, but is not particularly limited. The acquisition unit 14a may acquire $\tau_{all}$ from the monitoring target device 20 or another terminal, or may acquire $\tau_{all}$ directly input via the input unit 11.

Note that the order of the processing of steps S201 to S207 is exemplary, and the acquisition unit 14a or the extraction unit 14b can also perform the processing in a different order. In addition, the acquisition unit 14a or the extraction unit 14b can omit part of the processing of steps S201 to S207.

Thereafter, the determination unit 14c uses a genetic algorithm to generate a scan pattern that minimizes the evaluation index $E[\tau_{attack}]$ using the acquired $\tau_i$ and $\tau_{all}$ (step S208). Finally, the determination unit 14c determines an optimized scan pattern (step S209), and the processing ends.

Note that, in a case where it is desired to generate a scan pattern so as to scan all the files at least once in one cycle, the determination unit 14c may provide a penalty (penalties) to an objective function when there is a file that has not been scanned within one cycle at the time of executing the genetic algorithm. Specifically, when there is no completeness, a sufficiently large number (for example, 10,000,000 or the like) may be added to $E[\tau_{attack}]$ to be optimized, or a stepwise penalty such as adding the number of files not appearing in the scan pattern $\times$ 100 may be provided.

In addition, at the time of execution of the genetic algorithm, a scan pattern may be generated completely randomly at the time of initialization of a candidate population, or a scan pattern proportional to the access frequency may be generated in order to shorten the time required for convergence of the genetic algorithm and generate a more accurate scan pattern.

[Effects of First Embodiment]

First, in the tampering detection processing according to the present embodiment described above, an access pattern of a monitoring target file is acquired, a time-series pattern of access for each monitoring target file is extracted from the acquired access pattern, and a scan pattern is determined on the basis of the extracted time-series pattern of access.

Thus, in the present processing, it is possible to reduce the possibility that an authorized program executes an illicitly tampered file while suppressing use resources in a monitoring target device.

Second, in the tampering detection processing according to the present embodiment described above, the file size of the monitoring target file and the set time of the scan pattern are further acquired, the access frequency for each monitoring target file is further extracted from the access pattern, and the scan pattern is determined using a genetic algorithm. Thus, in the present processing, it is possible to more efficiently reduce the possibility that an authorized program executes an illicitly tampered file while suppressing use resources in a monitoring target device.

Third, in the tampering detection processing according to the present embodiment described above, a scan pattern in which all the monitoring target files are included at least once is determined by adding a predetermined penalty. Thus, in the present processing, it is possible to more comprehensively reduce the possibility that an authorized program executes an illicitly tampered file while suppressing use resources in a monitoring target device.

Fourth, in the tampering detection processing according to the present embodiment described above, the scan pattern that minimizes an average time from scanning of the monitoring target file to the latest access is determined. Thus, in the present processing, it is possible to more effectively reduce the possibility that an authorized program executes an illicitly tampered file while suppressing use resources in a monitoring target device.

Fifth, in the tampering detection processing according to the present embodiment described above, the access pattern is acquired from the monitoring target device that stores the monitoring target file, the scan pattern is transmitted to the monitoring target device, and whether or not the file has been tampered with is verified using the digest of the file generated on the basis of the scan pattern by the monitoring target device. Thus, in the present processing, in software tampering detection, it is possible to optimally and comprehensively monitor all the files, and it is possible to reduce the possibility that an authorized program executes an illicitly tampered file while suppressing use resources in the monitoring target device.

[System Configuration or the like]

Each component of each device that has been illustrated according to the embodiment described above is functionally conceptual and does not necessarily have to be physically configured as illustrated. In other words, a specific form of distribution and integration of individual devices is not limited to the illustrated form, and all or part of the configuration can be functionally or physically distributed and integrated in any unit according to various loads, usage conditions, and the like. Further, all or any part of each processing function performed in each device can be implemented by a CPU and a program to be analyzed and executed by the CPU or can be implemented as hardware by wired logic.

In addition, among the individual processing described in the embodiment described above, all or part of the processing described as being automatically performed can be manually performed, or all or part of the processing described as being manually performed can be automatically performed by a known method. Additionally, the processing procedures, the control procedures, the specific names, and the information including various data and parameters illustrated in the specification and the drawings can be arbitrarily changed unless otherwise specified.

[Program]

In addition, it is also possible to create a program in which the processing executed by the tampering detection device 10 described in the foregoing embodiment is described in a language which can be executed by a computer. In this case, the computer executes the program, and thus, the effects similar to those of the embodiment described above can be obtained. Further, the program may be recorded in a computer-readable recording medium, and the program recorded in the recording medium may be read and executed by the computer. Thereby, processing similar to the embodiment described above may be realized.

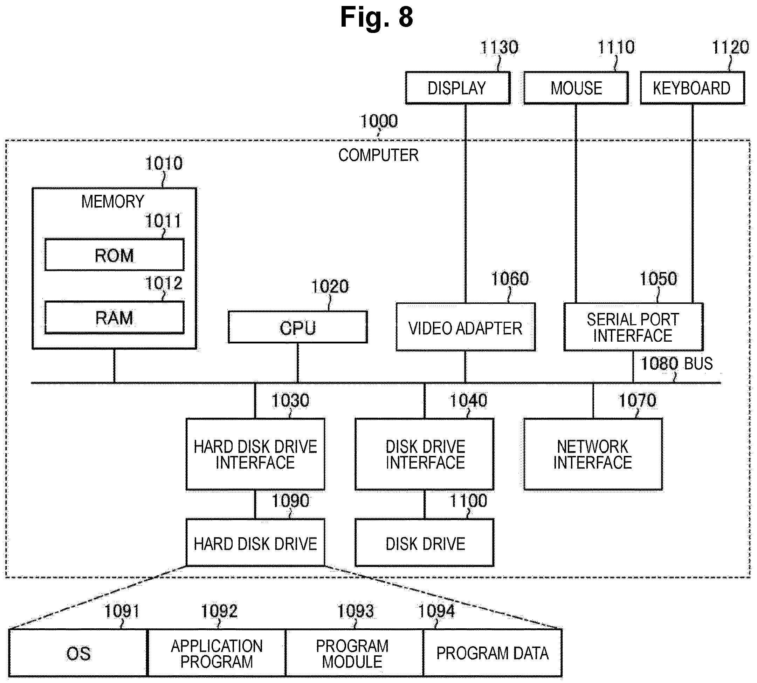

Fig. 8 is a diagram illustrating a computer that executes a program. As illustrated in Fig. 8, a computer 1000 includes, for example, memory 1010, a CPU 1020, a hard disk drive interface 1030, a disk drive interface 1040, a serial port interface 1050, a video adapter 1060, and a network interface 1070. These units are connected by a bus 1080.

As exemplified in Fig. 8, the memory 1010 includes a read only memory (ROM) 1011 and a RAM 1012. The ROM 1011 stores, for example, a boot program such as a basic input output system (BIOS). The hard disk drive interface 1030 is connected to a hard disk drive 1090 as exemplified in Fig. 8. The disk drive interface 1040 is connected to a disk drive 1100 as exemplified in Fig. 8. For example, a removable storage medium such as a magnetic disk or an optical disk is inserted into the disk drive 1100. As exemplified in Fig. 8, the serial port interface 1050 is connected to, for example, a mouse 1110 and a keyboard 1120. As exemplified in Fig. 8, the video adapter 1060 is connected to, for example, a display 1130.

Here, as exemplified in Fig. 8, the hard disk drive 1090 stores, for example, an OS 1091, an application program 1092, a program module 1093, and program data 1094. In other words, the above program is stored, for example, in the hard disk drive 1090 as a program module in which a command to be executed by the computer 1000 is described.

In addition, various data described in the embodiment described above is stored as program data in, for example, the memory 1010 and the hard disk drive 1090. Then, the CPU 1020 reads out the program module 1093 and the program data 1094 stored in the memory 1010 and the hard disk drive 1090 to the RAM 1012 as necessary and executes various processing procedures.

Note that the program module 1093 and the program data 1094 related to the program are not limited to being stored in the hard disk drive 1090 and may be stored in, for example, a removable storage medium and may be read by the CPU 1020 via a disk drive, or the like. Alternatively, the program module 1093 and the program data 1094 related to the program may be stored in another computer connected via a network (such as a local area network (LAN) or a wide area network (WAN)) and may be read by the CPU 1020 via the network interface 1070.

Reference Signs List

| | |
|---|---|
| 10 | Tampering detection device |
| 11 | Input unit |
| 12 | Output unit |
| 13 | Communication unit |
| 14 | Control unit |
| 14a | Acquisition unit |
| 14b | Extraction unit |
| 14c | Determination unit |
| 14d | Transmission unit |
| 14e | Verification unit |
| 15 | Storage unit |
| 15a | Monitoring target device information storage unit |
| 15b | File information storage unit |
| 15c | File digest storage unit |
| 20 | Monitoring target device |
| 21 | Input unit |
| 22 | Output unit |
| 23 | Communication unit |
| 24 | Control unit |
| 24a | Acquisition unit |
| 24b | Generation unit |
| 24c | Transmission unit |
| 25 | Storage unit |
| 25a | Monitoring target file storage unit |
| 100 | Tampering detection system |

**Claims**

1. A tampering detection device (10) comprising:

   an acquisition unit (14a) that acquires an access pattern and a file size of a monitoring target file in a monitoring target device as well as a set time of a scan pattern, and calculates a time required for hash calculation using the file size;
   an extraction unit (14b) that extracts a time-series pattern of access for each monitoring target file from the access pattern acquired by the acquisition unit (14a);
   a determination unit (14c) that determines the scan pattern on a basis of the time-series pattern of access extracted by the extraction unit (14b), the set time of the scan pattern and the time required for hash calculation;
   a transmission unit (14d) that transmits the scan pattern to the monitoring target device (20); and
   a verification unit (14e) that verifies whether or not the file has been tampered by using a digest of a file generated on a basis of the scan pattern by the monitoring target device (20).

2. The tampering detection device (10) according to claim 1, wherein

   the extraction unit (14b) further extracts an access frequency for each monitoring target file from the access pattern, and

the determination unit (14c) determines the scan pattern using a genetic algorithm.

3. The tampering detection device (10) according to claim 2, wherein
the determination unit (14c) determines a scan pattern in which all monitoring target files are included at least once by adding a predetermined penalty.

4. The tampering detection device (10) according to any one of claims 1 to 3, wherein
the determination unit (14c) determines the scan pattern that minimizes an average time from scanning of the monitoring target file to a latest access.

5. A tampering detection method executed by a tampering detection device (10), the method comprising:

an acquisition process of acquiring an access pattern and a file size of a monitoring target file in a monitoring target device as well as a set time of a scan pattern, and calculating a time required for hash calculation using the file size;
an extraction process of extracting a time-series pattern of access for each monitoring target file from the access pattern acquired by the acquisition process;
a determination process of determining the scan pattern on a basis of the time-series pattern of access extracted by the extraction process, the set time of the scan pattern, and the time required for hash calculation;
a transmission process of transmitting the scan pattern to the monitoring target device (20); and
a verification process of verifying whether or not the file has been tampered by using a digest of a file generated on a basis of the scan pattern by the monitoring target device (20).

6. A tampering detection program causing a computer (10) to execute:

an acquisition step of acquiring an access pattern and a file size of a monitoring target file in a monitoring target device as well as a set time of a scan pattern, and calculating a time required for hash calculation using the file size;
an extraction step of extracting a time-series pattern of access for each monitoring target file from the access pattern acquired by the acquisition step;
a determination step of determining the scan pattern on a basis of the time-series pattern of access extracted by the extraction step, the set time of the scan pattern, and the time required for hash calculation;
a transmission step of transmitting the scan pattern to the monitoring target device (20); and
a verification step of verifying whether or not the file has been tampered by using a digest of a file generated on a basis of the scan pattern by the monitoring target device (20).

**Patentansprüche**

1. Manipulationserkennungsvorrichtung (10), umfassend:

eine Erfassungseinheit (14a), die ein Zugriffsmuster und eine Dateigröße einer Überwachungsziel-Datei in einer Überwachungszielvorrichtung sowie eine vorgegebene Zeit eines Scanmusters erfasst, und anhand der Dateigröße eine für die Hash-Berechnung erforderliche Zeit berechnet;
eine Extraktionseinheit (14b), die ein zeitliches Zugriffsmuster für jede Überwachungsziel-Datei aus dem von der Erfassungseinheit (14a) erfassten Zugriffsmuster extrahiert;
eine Bestimmungseinheit (14c), die das Scanmuster auf der Grundlage des von der Extraktionseinheit (14b) extrahierten zeitlichen Zugriffsmusters, der vorgegebenen Zeit des Scanmusters und der für die Hash-Berechnung erforderlichen Zeit bestimmt;
eine Übertragungseinheit (14d), die das Scanmuster an die Überwachungszielvorrichtung (20) überträgt; und
eine Verifikationseinheit (14e), die anhand eines Hashwerts einer Datei, der von der Überwachungszielvorrichtung (20) auf der Grundlage des Scanmusters erzeugt wird, verifiziert, ob die Datei manipuliert worden ist oder nicht.

2. Manipulationserkennungsvorrichtung (10) nach Anspruch 1, wobei

die Extraktionseinheit (14b) weiter eine Zugriffshäufigkeit für jede Überwachungsziel-Datei aus dem Zugriffsmuster extrahiert, und
die Bestimmungseinheit (14c) das Scanmuster unter Verwendung eines genetischen Algorithmus bestimmt.

**3.** Manipulationserkennungsvorrichtung (10) nach Anspruch 2, wobei
die Bestimmungseinheit (14c) ein Scanmuster bestimmt, in welchem alle Überwachungsziel-Dateien mindestens einmal eingeschlossen sind, indem eine vorbestimmte Strafe hinzugefügt wird.

**4.** Manipulationserkennungsvorrichtung (10) nach einem der Ansprüche 1 bis 3, wobei
die Bestimmungseinheit (14c) das Scanmuster bestimmt, das eine durchschnittliche Zeit von einem Scannen der Überwachungsziel-Datei bis zu einem jüngsten Zugriff minimiert.

**5.** Manipulationserkennungsverfahren, das von einer Manipulationserkennungsvorrichtung (10) ausgeführt wird, wobei das Verfahren Folgendes umfasst:

einen Erfassungsprozess des Erfassens eines Zugriffsmusters und einer Dateigröße einer Überwachungsziel-Datei in einer Überwachungszielvorrichtung sowie einer vorgegebenen Zeit eines Scanmusters, und des Berechnens einer für die Hash-Berechnung erforderlichen Zeit anhand der Dateigröße;
einen Extraktionsprozess des Extrahierens eines zeitlichen Zugriffsmusters für jede Überwachungsziel-Datei aus dem von dem Erfassungsprozess erfassten Zugriffsmuster;
einen Bestimmungsprozess des Bestimmens des Scanmusters auf der Grundlage des von dem Extraktionsprozess extrahierten zeitlichen Zugriffsmusters, der vorgegebenen Zeit des Scanmusters, und der für die Hash-Berechnung erforderlichen Zeit;
einen Übertragungsprozess der Übertragung des Scanmusters an die Überwachungszielvorrichtung (20); und
einen Überprüfungsprozess zum Überprüfen, ob die Datei durch Verwendung eines auf der Grundlage des Abtastmusters durch die Überwachungszielvorrichtung (20) generierten Datei-Digests manipuliert wurde oder nicht.

**6.** Manipulationserkennungsprogramm, das einen Computer (10) zur Ausführung veranlasst:

einen Erfassungsschritt des Erfassens eines Zugriffsmusters und einer Dateigröße einer Überwachungsziel-Datei in einer Überwachungszielvorrichtung sowie einer vorgegebenen Zeit eines Scanmusters, und des Berechnens einer für die Hash-Berechnung erforderlichen Zeit anhand der Dateigröße;
einen Extraktionsschritt des Extrahierens eines zeitlichen Zugriffsmusters für jede Überwachungsziel-Datei aus dem von dem Erfassungsschritt erfassten Zugriffsmuster;
einen Bestimmungsschritt des Bestimmens des Scanmusters auf der Grundlage des von dem Extraktionsschritt extrahierten zeitlichen Zugriffsmusters, der vorgegebenen Zeit des Scanmusters, und der für die Hash-Berechnung erforderlichen Zeit;
einen Übertragungsschritt der Übertragung des Scanmusters an die Überwachungszielvorrichtung (20); und
einen Verifikationsschritt des Verifizierens, ob die Datei manipuliert worden ist oder nicht, unter Verwendung eines Hashwerts einer Datei, der von der Überwachungszielvorrichtung (20) auf der Grundlage des Scanmusters erzeugt wird.

**Revendications**

**1.** Dispositif (10) de détection de falsification comprenant :

une unité d'acquisition (14a) qui acquiert un modèle d'accès et une taille de fichier d'un fichier cible de surveillance dans un dispositif cible de surveillance ainsi qu'un temps défini d'un modèle de balayage, et calcule un temps requis pour un calcul de hachage en utilisant la taille de fichier ;
une unité d'extraction (14b) qui extrait un modèle de série chronologique d'accès pour chaque fichier cible de surveillance à partir du modèle d'accès acquis par l'unité d'acquisition (14a) ;
une unité de détermination (14c) qui détermine le modèle de balayage sur une base du modèle de série chronologique d'accès extrait par l'unité d'extraction (14b), du temps défini du modèle de balayage et du temps requis pour un calcul de hachage ;
une unité de transmission (14d) qui transmet le modèle de balayage au dispositif (20) cible de surveillance ; et
une unité de vérification (14e) qui vérifie si le fichier a été falsifié ou non par l'utilisation d'un condensé d'un fichier généré sur une base du modèle de balayage par le dispositif (20) cible de surveillance.

**2.** Dispositif (10) de détection de falsification selon la revendication 1, dans lequel

l'unité d'extraction (14b) extrait en outre une fréquence d'accès pour chaque fichier cible de surveillance à partir du modèle d'accès, et

l'unité de détermination (14c) détermine le modèle de balayage en utilisant un algorithme génétique.

3. Dispositif (10) de détection de falsification selon la revendication 2, dans lequel

l'unité de détermination (14c) détermine un modèle de balayage dans lequel tous les fichiers cibles de surveillance sont inclus au moins une fois par l'ajout d'une pénalité prédéterminée.

4. Dispositif (10) de détection de falsification selon l'une quelconque des revendications 1 à 3, dans lequel

l'unité de détermination (14c) détermine le modèle de balayage qui minimise un temps moyen depuis un balayage du fichier cible de surveillance jusqu'à un dernier accès.

5. Procédé de détection de falsification exécuté par un dispositif (10) de détection de falsification, le procédé comprenant :

un processus d'acquisition consistant à acquérir un modèle d'accès et une taille de fichier d'un fichier cible de surveillance dans un dispositif cible de surveillance ainsi qu'un temps défini d'un modèle de balayage, et à calculer un temps requis pour un calcul de hachage en utilisant la taille de fichier ;
un processus d'extraction consistant à extraire un modèle de série chronologique d'accès pour chaque fichier cible de surveillance à partir du modèle d'accès acquis par le processus d'acquisition ;
un processus de détermination consistant à déterminer le modèle de balayage sur une base du modèle de série chronologique d'accès extrait par le processus d'extraction, du temps défini du modèle de balayage, et du temps requis pour un calcul de hachage ;
un processus de transmission consistant à transmettre le modèle de balayage au dispositif (20) cible de surveillance ; et
un processus de vérification consistant à vérifier si le fichier a été falsifié ou non par l'utilisation d'un condensé d'un fichier généré sur une base du modèle de balayage par le dispositif (20) cible de surveillance.

6. Programme de détection de falsification amenant un ordinateur (10) à exécuter :

une étape d'acquisition consistant à acquérir un modèle d'accès et une taille de fichier d'un fichier cible de surveillance dans un dispositif cible de surveillance ainsi qu'un temps défini d'un modèle de balayage, et à calculer un temps requis pour un calcul de hachage en utilisant la taille de fichier ;
une étape d'extraction consistant à extraire un modèle de série chronologique d'accès pour chaque fichier cible de surveillance à partir du modèle d'accès acquis par l'étape d'acquisition ;
une étape de détermination consistant à déterminer le modèle de balayage sur une base du modèle de série chronologique d'accès extrait par l'étape d'extraction, du temps défini du modèle de balayage, et du temps requis pour un calcul de hachage ;
une étape de transmission consistant à transmettre le modèle de balayage au dispositif (20) cible de surveillance ; et
une étape de vérification consistant à vérifier si le fichier a été falsifié ou non par l'utilisation d'un condensé d'un fichier généré sur une base du modèle de balayage par le dispositif (20) cible de surveillance.

# Fig. 1

100

DETERMINE SCAN PATTERN ON BASIS OF ACCESS PATTERN OR THE LIKE
S2

S6
VERIFY PRESENCE OR ABSENCE OF TAMPERING ON BASIS OF ACQUIRED DIGEST OF FILE

10

TAMPERING DETECTION DEVICE

TRANSMIT ACCESS PATTERN, FILE SIZE, OR THE LIKE OF MONITORING TARGET FILE
S1

S3 TRANSMIT DETERMINED SCAN PATTERN

S5 TRANSMIT GENERATED DIGEST

20

MONITORING TARGET DEVICE

S4 GENERATE DIGEST OF FILE ACCORDING TO ACQUIRED SCAN PATTERN

# Fig. 2

TAMPERING DETECTION DEVICE — 10

INPUT UNIT — 11

OUTPUT UNIT — 12

COMMUNICATION UNIT — 13

CONTROL UNIT — 14
- ACQUISITION UNIT — 14a
- EXTRACTION UNIT — 14b
- DETERMINATION UNIT — 14c
- TRANSMISSION UNIT — 14d
- VERIFICATION UNIT — 14e

STORAGE UNIT — 15
- MONITORING TARGET DEVICE INFORMATION STORAGE UNIT — 15a
- FILE INFORMATION STORAGE UNIT — 15b
- FILE DIGEST STORAGE UNIT — 15c

# Fig. 3

MONITORING TARGET DEVICE — 20

INPUT UNIT — 21

OUTPUT UNIT — 22

COMMUNICATION UNIT — 23

CONTROL UNIT — 24

ACQUISITION UNIT — 24a

GENERATION UNIT — 24b

TRANSMISSION UNIT — 24c

STORAGE UNIT — 25

MONITORING TARGET FILE STORAGE UNIT — 25a

17

# Fig. 4

CERTAIN TIME t

$prev_{fileB}(t)$    $prev_{fileC}(t)$    $next_{fileB}(t)$    $next_{fileA}(t)$

$\tau_{i=fileA}$

FILE A      | SCAN |                                                          | SCAN |

$\tau_{i=fileB}$

FILE B      | SCAN |              | SCAN |              | SCAN |

$\tau_{i=fileC}$

FILE C            | SCAN |        | SCAN |

$\tau_{all}$

$s^1_{fileA}$    $s^1_{fileB}$    $s^1_{fileC}$    $s^2_{fileB}$    $s^2_{fileC}$    $s^3_{fileB}$    $s^1_{fileA}$

EP 4 261 720 B1

# Fig. 5

# Fig. 6

```
          ┌─────────────┐
          │    START    │
          └─────────────┘
                 │
                 ▼            ⟋S101
  ┌───────────────────────────────┐
  │      ACQUIRE ACCESS PATTERN,   │
  │      FILE SIZE, OR THE LIKE OF │
  │       MONITORING TARGET FILE   │
  │   FROM MONITORING TARGET DEVICE│
  └───────────────────────────────┘
                 │
                 ▼            ⟋S102
  ┌───────────────────────────────┐
  │  DETERMINE SCAN PATTERN ON BASIS│
  │   OF ACCESS PATTERN OR THE LIKE │
  └───────────────────────────────┘
                 │
                 ▼            ⟋S103
  ┌───────────────────────────────┐
  │      TRANSMIT SCAN PATTERN TO   │
  │      MONITORING TARGET DEVICE   │
  └───────────────────────────────┘
                 │
                 ▼            ⟋S104
  ┌───────────────────────────────┐
  │  ACQUIRE DIGEST OF FILE GENERATED│
  │          AND TRANSMITTED         │
  │     BY MONITORING TARGET DEVICE  │
  └───────────────────────────────┘
                 │
                 ▼            ⟋S105
  ┌───────────────────────────────┐
  │  VERIFY PRESENCE OR ABSENCE OF  │
  │      TAMPERING ON BASIS OF      │
  │      DIGEST OF FILE ACQUIRED    │
  │   FROM MONITORING TARGET DEVICE │
  └───────────────────────────────┘
                 │
                 ▼
          ┌─────────────┐
          │     END     │
          └─────────────┘
```

# Fig. 7

```
                    ┌──────────────┐
                    │    START     │
                    └──────┬───────┘
                           │              S201
        ┌──────────────────▼──────────────────────┐
        │ ACQUIRE ACCESS LOG OF FILE OF CERTAIN    │
        │ PERIOD OF MONITORING TARGET DEVICE       │
        └──────────────────┬──────────────────────┘
                           │              S202
        ┌──────────────────▼──────────────────────┐
        │        ACQUIRE ACCESS PATTERN            │
        │       FROM ACQUIRED ACCESS LOG           │
        └──────────────────┬──────────────────────┘
                           │              S203
        ┌──────────────────▼──────────────────────┐
        │       EXTRACT ACCESS FREQUENCY           │
        │     FROM ACQUIRED ACCESS PATTERN         │
        └──────────────────┬──────────────────────┘
                           │              S204
        ┌──────────────────▼──────────────────────┐
        │  EXTRACT TIME-SERIES PATTERN OF ACCESS   │
        │     FROM ACQUIRED ACCESS PATTERN         │
        └──────────────────┬──────────────────────┘
                           │              S205
        ┌──────────────────▼──────────────────────┐
        │ ACQUIRE FILE SIZE OF MONITORING TARGET   │
        │ FILE                                     │
        └──────────────────┬──────────────────────┘
                           │              S206
        ┌──────────────────▼──────────────────────┐
        │ ACQUIRE TIME τj REQUIRED FOR HASH        │
        │ CALCULATION FROM ACQUIRED FILE SIZE      │
        └──────────────────┬──────────────────────┘
                           │              S207
        ┌──────────────────▼──────────────────────┐
        │ ACQUIRE SET TIME τall OF ONE SCAN        │
        │ PATTERN CYCLE                            │
        └──────────────────┬──────────────────────┘
                           │              S208
        ┌──────────────────▼──────────────────────┐
        │ GENERATE SCAN PATTERN THAT SATISFIES     │
        │ CONDITION                                │
        └──────────────────┬──────────────────────┘
                           │              S209
        ┌──────────────────▼──────────────────────┐
        │   DETERMINE OPTIMIZED SCAN PATTERN       │
        └──────────────────┬──────────────────────┘
                           │
                    ┌──────▼───────┐
                    │     END      │
                    └──────────────┘
```

- S201: ACQUIRE ACCESS LOG OF FILE OF CERTAIN PERIOD OF MONITORING TARGET DEVICE
- S202: ACQUIRE ACCESS PATTERN FROM ACQUIRED ACCESS LOG
- S203: EXTRACT ACCESS FREQUENCY FROM ACQUIRED ACCESS PATTERN
- S204: EXTRACT TIME-SERIES PATTERN OF ACCESS FROM ACQUIRED ACCESS PATTERN
- S205: ACQUIRE FILE SIZE OF MONITORING TARGET FILE
- S206: ACQUIRE TIME $\tau_j$ REQUIRED FOR HASH CALCULATION FROM ACQUIRED FILE SIZE
- S207: ACQUIRE SET TIME $\tau_{all}$ OF ONE SCAN PATTERN CYCLE
- S208: GENERATE SCAN PATTERN THAT SATISFIES CONDITION
- S209: DETERMINE OPTIMIZED SCAN PATTERN

# Fig. 8

COMPUTER 1000

MEMORY 1010
ROM 1011
RAM 1012

CPU 1020

VIDEO ADAPTER 1060

SERIAL PORT INTERFACE 1050

1080 BUS

HARD DISK DRIVE INTERFACE 1030

DISK DRIVE INTERFACE 1040

NETWORK INTERFACE 1070

HARD DISK DRIVE 1090

DISK DRIVE 1100

DISPLAY 1130

MOUSE 1110

KEYBOARD 1120

OS 1091

APPLICATION PROGRAM 1092

PROGRAM MODULE 1093

PROGRAM DATA 1094

EP 4 261 720 B1

**EP 4 261 720 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019008376 A
- JP 2019008732 A
- JP 2019207661 A
- US 2007079377 A1
- US 2020034534 A1